# EUROPÄISCHE PATENTSCHRIFT

(11) **EP 2 193 940 B1**
(45) Veröffentlichungstag und Bekanntmachung des Hinweises auf die Patenterteilung: **20.03.2013**
(21) Anmeldenummer: 09176467.0
(22) Anmeldetag: 19.11.2009
(51) Int. Cl.: B60D 1/52

(54) **Anhängekupplung sowie Kugelstange einer Anhängekupplung**
Tow bar and coupling ball bar of same
Attelage de remorque et barre à boule d'un attelage de remorque

(30) Priorität: 04.12.2008 DE 202008016077 U
(43) Veröffentlichungstag der Anmeldung: 09.06.2010
(73) Patentinhaber: MVG Metallverarbeitungsgesellschaft mbH, 52249 Eschweiler (DE)
(72) Erfinder: Esch, Michael, 53945 Blankenheim (DE)
(74) Vertreter: Bauer, Dirk

(56) Entgegenhaltungen:
- EP-A- 1 935 675
- EP-A1- 0 223 996
- DE-A1- 10 153 490
- DE-A1-102005 039 076
- DE-C1- 4 441 460
- DE-U1- 20 204 951
- DE-U1- 29 708 488

## Beschreibung

### Einleitung

Die Erfindung betrifft eine Anhängekupplung mit einem fahrzeugfest anbringbaren Aufnahmeelement und einer Kräfte und Momente übertragend damit koppelbaren abnehmbaren Kugelstange, die an einem dem Aufnahmeelement abgewandten Ende mit einer Kupplungskugel zur Ankopplung eines Kupplungselements eines Anhängers versehen ist und an einem gegenüberliegenden Ende einen Einsteckabschnitt aufweist, der in einen Aufnahmeabschnitt des Aufnahmeelements einführbar und dort in einer Betriebsstellung der Kugelstange formschlüssig arretierbar ist, wobei die Kugelstange mittels eines Keilschiebers arretierbar ist, der in Richtung einer Längsachse des Aufnahmeelements von einer Arretierstellung, in der ein Formschluss zwischen dem Aufnahmeabschnitt und dem Einsteckabschnitt besteht, in eine Lösestellung verschiebbar ist, in der der Formschluss aufhebbar ist, wobei der Keilschieber mit zwei senkrecht zu seiner Längsachse ausgerichteten Bohrungen versehen ist, wobei von der einen Bohrung ein den Keilschieber in seiner Lösestellung haltender Rückhaltestift aufnehmbar und in der anderen Bohrung ein über eine Mantelfläche des Keilschiebers vorstehendes Druckelement aus einem ein Festsetzen des Keilschiebers in dem Einsteckabschnitt der Kugelstange verhindernden Material angeordnet ist. Darüber hinaus betrifft die Erfindung eine Kugelstange für eine so genannte abnehmbare Anhängekupplung der vorstehend beschriebenen Art.

### Stand der Technik

Eine Anhängekupplung der vorgenannten Art ist beispielsweise aus der DE 297 08 488 U1 bekannt. Das darin offenbarte und als Pufferelement bezeichnete Druckelement soll ermöglichen, dass ausgehend von der Betriebsstellung der Kugelstange der einen Formschluss bewirkende Keilschieber, in der DE 297 08 488 U1 "Schubstange" genannt, ohne größere Kraftanstrengung und ohne zu verklemmen in die Lösestellung überführt werden kann, damit die Kugelstange sodann aus dem Aufnahmeelement entnommen und an einem anderen Ort verwahrt werden kann. Als Material des Druckelements wird bei der bekannten Anhängekupplung ein Elastomer mit großer Shorehärte und einer Zugfestigkeit von mindestens 70 N/mm² genannt. Das Druckelement wirkt wie eine Art Federelement, das um einen bestimmten Betrag von ca. 0,1 mm bis 0,15 mm über die äußere Mantelfläche des Keilschiebers vorsteht und somit zunächst in den Kraftfluss zwischen Aufnahmeelement und Einsteckabschnitt der Kugelstange integriert ist. Nach Überschreiten einer bestimmten Kompressionskraft ist das Druckelement so weit komprimiert, dass es nicht mehr über die Mantelfläche des Keilschiebers vorsteht, so dass die Kraftübertragung allein über die metallischen Bauteile erfolgt. Das Druckelement bewirkt nach Art einer Feder jedoch ein Ablösen des Keilschiebers von der korrespondierenden Kontaktfläche des Einsteckabschnitts, so dass ein Festklemmen verhindert wird. Wird beispielsweise Polytetrafluorethylen (PTFE) oder Polyoximethylen (POM) als Material des Druckelements verwendet, so ist ein reibungsarmes Gleiten des Keilschiebers bei der Überführung von der Arretierstellung in die Lösestellung ebenso wie ein kräftearmes Entfernen der Kugelstange sichergestellt.

Während die DE 297 08 488 U1 im Wesentlichen lediglich den vorderen, mit der Keilfläche versehenen Abschnitt des Keilschiebers mit den zugehörigen Ausnehmungen für das Druckelement sowie den Arretierstift beschreibt, enthält das auf denselben Inhaber zurückgehende ältere deutsche Gebrauchsmuster DE 91 05 268 U1 eine ausführliche Abhandlung über das Zusammenwirken des Einsteckabschnitts der Kugelstange mit dem Aufnahmeabschnitt des Aufnahmeelements sowie des mit den beiden vorgenannten Teilen zusammenwirkenden Keilschiebers.

Bei dem Keilschieber gemäß der DE 297 08 488 U1 sind die Ausnehmungen für den Arretierstift einerseits und das Druckelement (Pufferelement) andererseits räumlich sehr dicht nebeneinander angeordnet. Dies führt insbesondere auch dann zu Problemen, wenn im Bereich des Einsteckabschnitts der Kugelstange sowie des Aufnahmeabschnitts des Aufnahmeelements unterschiedliche Geometrien und unterschiedliche Ausrichtungen in der Betriebsstellung im Hinblick auf das Zugfahrzeug realisiert werden sollen. Hier sind entweder die Freiheiten der Gestaltung eingeschränkt oder aber eine Vielzahl von eigenständigen konstruktiven Varianten erforderlich, die eine große Anzahl unterschiedlicher Bauelemente erfordern, wodurch wiederum die Stückzahlen gering und die Herstellkosten vergleichsweise hoch gehalten werden.

Aus der DE 202 04 951 U1 ist eine Anhängekupplung bekannt, bei der die Kugelstange mit einem Ende in Form eines quadratischen Rohres in eine Aufnahmehülse mit einem entsprechenden Quadratquerschnitt einsteckbar und dort arretierbar ist. Die Verriegelung der Kugelstange innerhalb der Aufnahmehülse erfolgt bei dem in den Figuren 13 bis 19 gezeigten Ausführungsbeispiel mit Hilfe eines als Sperrorgan bezeichneten Keilschiebers. Bei diesem sind sowohl ein Arretierstift zur Herstellung einer Formschlussverbindung als auch ein Druckbolzen zur Verminderung eines Verklemmens des Keilschiebers vorhanden. Dabei ist der Druckbolzen näher an der Spitze des Keilschiebers angeordnet und größer im Durchmesser als der federbelastete und in einer tieferen Aufnahmebohrung angeordnete Arretierstift.

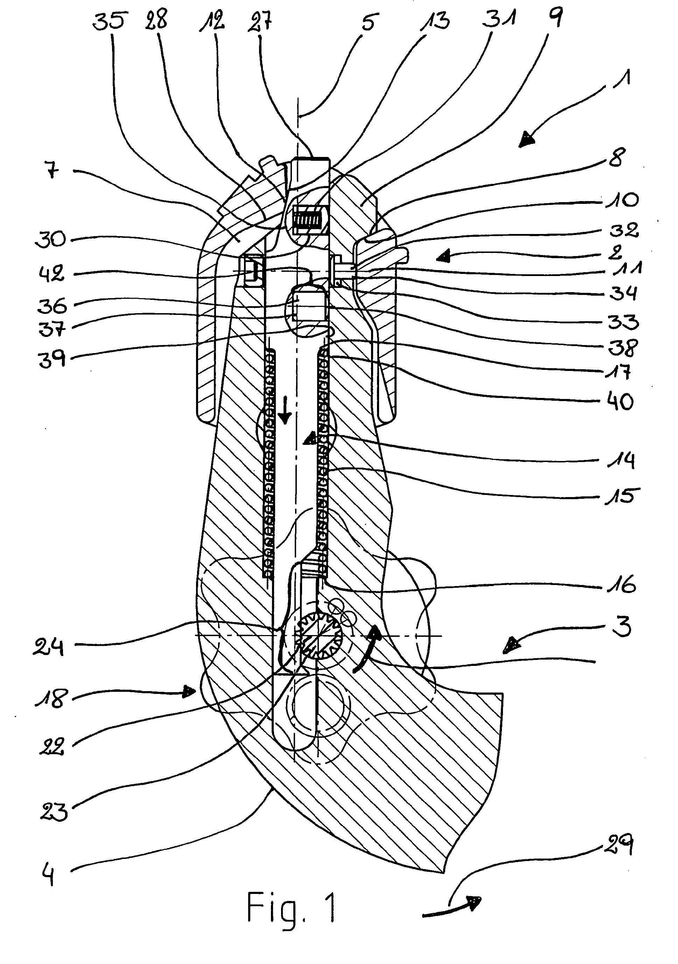

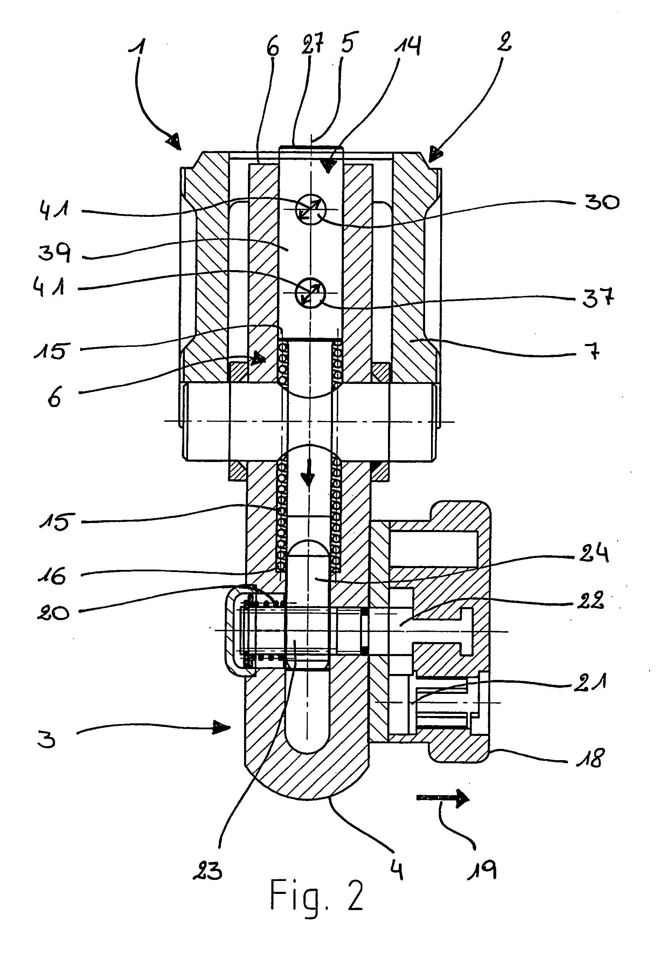

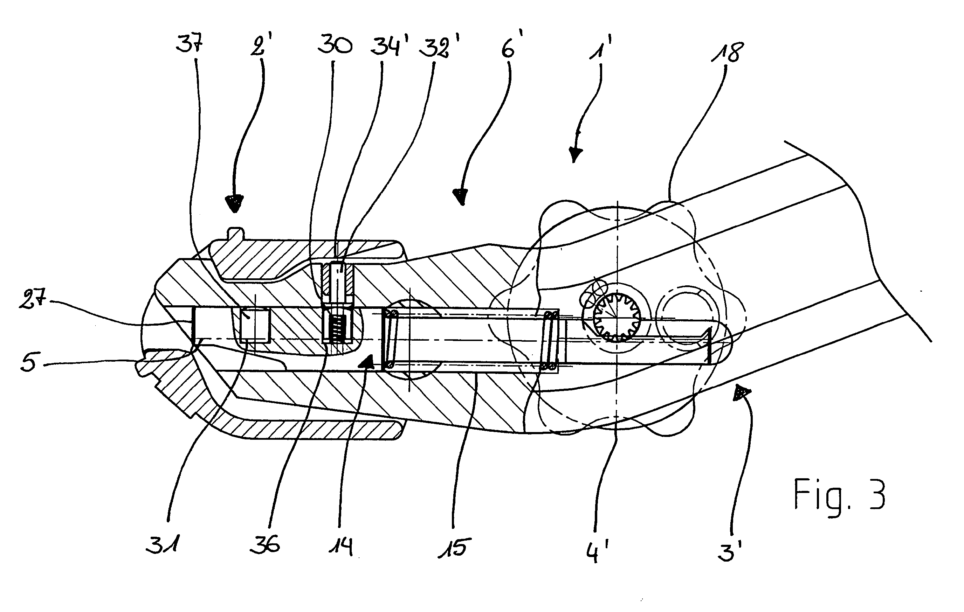

Die EP 1 935 675 A1 beschreibt eine Anhängekupplung, bei der am Ende des Keilschiebers ein Druckbolzen (vgl. Bezugszeichen 12 in Figur 3B) vorhanden ist, der als Kunststoff-Federelement aus Nylon beschrieben ist und eine konvexe Oberfläche besitzt. Ein Arretier- oder Rückhaltestift ist in dieser älteren Druckschrift in Verbindung mit dem Keilschieber nicht offenbart. Bei dem in den Figuren 1 und 2A sowie 2B mit den Bezugszeichen 56 versehenen Stift handelt es sich um einen Gelenkbolzen, der einen vorderen Keilabschnitt des Keilschiebers mit einem hinteren Stangenabschnitt in leicht gelenkiger Weise verbindet.

Zum Stand der Technik zählt darüber hinaus die EP 0 700 799 A1, aus der gleichfalls eine Arretierung einer Kugelstange in ihrer Halterung mit Hilfe eines Keilschiebers offenbart ist. Der Keilschieber besitzt gemäß den Figuren 6A und 6B dieser Schrift zwar einen Arretierstift, mit dem sich der Keilschieber in seiner gelösten Stellung in der Kugelstange arretieren lässt. Darüber hinaus besitzt die vorbekannte Kugelstange einen in ihr selbst gelagerten Auslösestift, mit dem der Arretierstift in die Bohrung in dem Keilschieber verschiebbar ist, so dass der federbelastete Keilschieber in seine Sperrstellung vorschnellt. Ein Druckelement, mit dem sich ein Verklemmen des Keilschiebers verhindern ließe, ist in der EP 0 700 799 A1 nicht vorhanden.

Schließlich offenbart die EP 0 223 996 A1 noch eine weitere Anhängekupplung mit einer Verriegelung der abnehmbaren Kugelstange mit Hilfe eines Keilschiebers. Insbesondere in den Figuren 6 und 7 ist ein Keilschieber gezeigt, auf den auf der der Keilfläche gegenüber liegenden Seite von oben ein Druckelement 70 bzw. 71 auf den Mantel des Keilschiebers bzw. die Mantelfläche der Kugelstangenbohrung wirkt. Während das Druckelement gemäß Figur 6 als Federbolzen ausgebildet ist, handelt es sich bei dem Druckelement gemäß Figur 7 um ein elastomeres Federglied. Ein in einer Bohrung des Keilschiebers gelagerter Arretierstift ist in der EP 0 223 996 A1 nicht beschrieben.

### Aufgabe

Der Erfindung liegt die Aufgabe zugrunde, eine Anhängekupplung bzw. eine abnehmbare Kugelstange einer Anhängekupplung vorzuschlagen, mit der sich auch unterschiedliche Varianten in Bezug auf die Ausrichtung des Einsteckabschnitts der Kugelstange relativ zu dem Zugfahrzeug verwirklichen lassen, wobei zur Reduzierung der Kosten weitestgehend eine Verwendung von Gleichteilen möglich sein soll.

### Lösung

Ausgehend von einer Anhängekupplung der eingangs beschriebenen Art wird die zugrunde liegende Aufgabe dadurch gelöst, dass der Rückhaltestift von der Bohrung des Druckelements und das Druckelement von der Bohrung des Rückhaltestifts aufnehmbar sind.

Mit der Erfindung wird es somit möglich, die beiden Bohrungen insofern universell zu verwenden, als beide zur Aufnahme sowohl des Druckelements als auch des Arretierstifts geeignet sind. Unabhängig davon, wie die beiden Bohrungen je nach Ausführungsvariante der erfindungsgemäßen Anhängekupplung benutzt werden, lassen sich jeweils dieselben Druckelemente bzw. Arretierstifte verwenden. Losgelöst von der jeweiligen Variante kann stets derselbe Keilschieber verwendet werden, so dass entsprechend große Stückzahlen gefertigt werden können, wodurch die Herstellkosten sinken. Die Erfindung macht sich somit das Prinzip einer weitestgehenden Verwendung von Gleichteilen für unterschiedliche Bauausführungen von Anhängekupplungen zunutze. Unter Bohrung im Sinn der vorliegenden Anmeldung soll nicht nur eine mittels eines Bohrers hergestellte, kreiszylindrische Ausnehmung bzw. Vertiefung verstanden werden, sondern auch solche in den Keilschieber eingeformte Ausnehmungen bzw. Vertiefungen, die andere Geometrien besitzen oder mit anderen Fertigungsverfahren erzeugt werden.

Die beiden Bohrungen weisen denselben Durchmesser und dieselbe Tiefe, gemessen von der jeweiligen Mantelfläche des Keilschiebers, auf.

Gemäß einer bevorzugten Weiterbildung der Erfindung ist der Rückhaltestift in eine Bohrung eingesetzt und steht in einer Sperrstellung des Keilschiebers, beaufschlagt durch ein Federelement, über eine Mantelfläche des Keilschiebers nach außen vor und greift in eine Bohrung bzw. Ausnehmung in dem Einsteckabschnitt der Kugelstange ein. Hingegen ist er in einer Freigabestellung des Keilschiebers in das Innere des Keilschiebers zurückgedrückt, wobei der Rückhaltestift von einem in dem Einsteckabschnitt der Kugelstange senkrecht zu dessen Längsachse verschiebbar gelagerten Auslösestift zurückdrückbar ist.

Gemäß einer wichtigen Ausführungsvariante der Erfindung ist das Druckelement näher an dem von dem Aufnahmeelement in der Betriebsstellung aufgenommenen Ende der Kugelstange angeordnet als der Rückhaltestift, wobei der Einsteckabschnitt der Kugelstange in der Betriebsstellung vertikal ausgerichtet ist. Ausführungsformen mit einem in Betriebsstellung vertikal verlaufenden Einsteckabschnitt der Kugelstange zeichnen sich dadurch aus, dass einerseits das Aufnahmeelement verdeckt hinter einem Stoßfänger angeordnet sein kann und andererseits eine Durchdringung des Stoßfängers nicht erforderlich ist, so dass eine derartige Variante sehr hohen Ansprüchen an die Ästhetik gerecht wird. Bei dieser Variante ist der Auslösestift in der Betriebsstellung der Kugelstange typischerweise weiter entfernt von dem von dem Aufnahmeelement aufgenommenen Ende der Kugelstange angeordnet als die beiden Bohrungen.

Eine zweite Variante der erfindungsgemäßen Anhängekupplung wird gebildet von einer Ausführung, bei der der Einsteckabschnitt der Kugelstange in der Betriebsstellung horizontal ausgerichtet ist, so dass auch die Einsteckbewegung in diese Richtung auszuführen ist. In diesem Fall kann der Rückhaltestift näher an dem von dem Aufnahmeende in der Betriebsstellung aufgenommenen Ende der Kugelstange angeordnet sein als das Druckelement. Der Ablösestift befindet sich bei dieser Variante der Kugelstange typischerweise zwischen den beiden Bohrungen.

### Ausführungsbeispiele

Die Erfindung wird nachfolgend anhand zweier Ausführungsbeispiele, die in der Zeichnung dargestellt sind, näher erläutert.

Es zeigt:
- Fig. 1:: Einen Längsschnitt durch eine Anhängekupplung mit einem in Betriebsstellung vertikal ausgerichteten Einsteckabschnitt der Kugelstange,
- Fig. 2:: wie Figur 1, jedoch mit einer um 90° verdrehten Schnittebene,
- Fig. 3:: wie Figur 1, jedoch mit einem in Betriebsstellung horizontal ausgerichteten Einsteckabschnitt der Kugelstange und
- Fig. 4:: wie Figur 3, jedoch mit einer um 90° verdrehten Schnittebene.

Eine in den Figuren 1 und 2 ausschnittsweise gezeigte Anhängekupplung 1 weist ein mit einem Fahrzeugteil verbindbares, im vorliegenden Fall hülsenförmiges, Aufnahmeelement 2 und eine darin einsteckbare, lediglich abgebrochen dargestellte Kugelstange 3 auf. Die Kugelstange 3 besitzt ausgehend von einer Kröpfung 4 einen nicht dargestellten Abschnitt mit einer weiteren Kröpfung und einer sich an einen Kugelhals anschließenden Kupplungskugel. Gegenüber liegend ist die Kugelstange 3 mit einem in der gezeigten Betriebsstellung mit seiner Längsachse 5 vertikal ausgerichteten Einsteckabschnitt 6 in einen Aufnahmeabschnitt 7 des Aufnahmeelements 2 eingeführt und dort formschlüssig festgelegt. Die Formschlussverbindung wird in der gezeigten Betriebsstellung der Kugelstange 3 hergestellt zum einen von einer Kontaktfläche 8 eines Hintergreifelements 9 am Ende des Einsteckabschnitts 6 der Kugelstange 3 und einer damit korrespondierenden Kontaktfläche 10, die an einem Rückhaltekörper 11 des Aufnahmeelements 2 ausgebildet ist. Gegenüberliegend ist an dem Aufnahmeelement 2 eine Stützfläche 12 ausgebildet, die mit einer Keilfläche 13 eines Keilschiebers 14 zusammenwirkt, wenn sich dieser, wie in Figur 1 dargestellt, in seiner Arretierstellung befindet und eine Aufhebung des Formschlusses im Bereich der Kontaktflächen 8 und 10 unterbindet.

Der Keilschieber 14 ist koaxial zu dem Aufnahmeabschnitt 7 der Kugelstange 3 in einer angepassten Bohrung gelagert und in Richtung der Längsachse 5, die auch der Längsachse des Keilschiebers 14 entspricht, verschiebbar.

Eine um einen Mittelabschnitt des Keilschiebers 14 herum angeordnete Schraubenfeder 15 spannt den Keilschieber 14 in Richtung auf die in Figuren 1 und 2 dargestellte Arretierstellung des Keilschiebers 14 vor. Die Schraubenfeder 15 stützt sich einerseits an einer Stufe 16 der Bohrung in dem Einsteckabschnitt 6 und andererseits an einer Stufe 17 im äußeren Mantel des Keilschiebers 14 ab.

Um den Keilschieber 14 aus der dargestellten Arretierposition herraus in eine nicht abgebildete Lösestellung zu überführen, wird ein in Figur 2 gut erkennbares Handrad 18 zunächst in Richtung eines Pfeils 19 um einen gewissen Betrag axial von dem Einsteckabschnitt 6 der Kugelstange 3 abgehoben. Hierzu ist die Kraft einer weiteren Schraubenfeder 20 zu überwinden, die das Handrad 18 in Richtung auf den Einsteckabschnitt 6 vorspannt. Das axiale Abziehen des Handrades 18 ist deshalb erforderlich, um das Handrad 18 außer Eingriff mit einem nicht gezeigten aus der Kugelstange 3 vorstehenden Blockierstift zu bringen, der in seiner Eingriffstellung ein Drehen des Handrads 18 verhindert.

Wird das Handrad 18 in der abgezogenen Stellung gedreht, so dreht sich auch eine drehmomentfest hiermit gekoppelte Welle 22, die im Bereich des Keilschiebers 14 als Ritzel 23 ausgeführt ist, das mit einem Zahnstangenabschnitt 24 des Keilschiebers 14 zusammenwirkt. Die Drehung des Handrades 18 in Richtung des Pfeils 25 bewirkt eine Rückzugsbewegung des Keilschiebers 14 in Richtung des Pfeils 26, so dass die Keilfläche 13 und die korrespondierende Stützfläche 12 außer Eingriff geraten. Sobald eine Stirnfläche 27 des Keilschiebers 14 vor eine Schrägfläche 28 des Aufnahmeabschnitts 7 des Aufnahmeelements 2 gerät, lässt sich die Kugelstange 3 in Richtung des Pfeils 29 verkippen, so dass das Hintergreifelement 9 hinter dem Rückhaltekörper 11 hervortreten kann und anschließend die Kugelstange 3 nach unten, und zwar leicht nach vorne geneigt, herausgezogen werden kann.

Im Zuge des Zurückziehens des Keilschiebers 14 kommt ein Rückhaltestift 30, der in einer angepassten Bohrung 31 in dem Keilschieber 14 gelagert ist, zur Deckung mit einem Auslösestift 32, der senkrecht zu der Längsachse 5 des Keilschiebers in einer Rückhaltebohrung 33 in dem Einsteckabschnitt 6 der Kugelstange 3 gelagert ist. Sobald die Kugelstange 3 nach Rückzug des Keilschiebers 14 ein wenig verkippt und somit der Auslösestift 32 von dem Auslösewandabschnitt 34 entfernt ist, tritt der Rückhaltestift 30 in die Rückhaltebohrung 33 ein, indem er den Auslösestift 32 entsprechend verdrängt. Der Rückhaltestift 30 ist mit einer in seinem Inneren angeordneten Schraubenfeder 35 belastet.

Aufgrund der Sperrwirkung des Rückhaltestifts 30 wird somit der Keilschieber 14 in seiner zurückgezogenen Lösestellung (in den Figuren nicht dargestellt) festgehalten, auch wenn das Handrad 18 im Zuge der weiteren Entfernung der Kugelstange 3 aus dem Aufnahmeelement 2 losgelassen wird. Das Handrad 18 verbleibt dabei in seiner axial abgezogenen, nicht blockierten Stellung, da der Blockierstift nicht in seiner Arretierbohrung einliegt.

In der vorstehend beschriebenen Stellung verbleiben Kugelstange 2 mit Keilschieber 14 während des Nicht-Gebrauchs der Anhängekupplung 1 so lange, bis zu einem späteren Zeitpunkt wieder eine Montage der Kugelstange erfolgt. Während letztere leicht schräg geneigt mit zurückgezogenem Keilschieber 14 in den Aufnahmeabschnitt 7 des Aufnahmeelements 2 eingeführt wird, verharrt der Keilschieber 14 zunächst noch in seiner Lösestellung. Sobald die Kugelstange 3 nunmehr gegen Ende des Montagevorgangs entgegen der Richtung des Pfeils 29 gekippt wird, so dass das Hintergreifungselement 9 hinter den Rückhaltekörper 11 gelangt, kommt auch der Auslösestift 32 in Kontakt mit dem Auslösewandabschnitt 34 des Rückhaltekörpers. Gegen die Kraft der Schraubenfeder 35 drückt der Auslösestift 32 den Rückhaltestift 30 aus der Rückhaltebohrung 33 hinaus. Sobald der Rückhaltestift 30 wieder vollständig in die Bohrung 31 zurückgezogen ist, verliert er seine Arretierwirkung, so dass der Keilschieber - bedingt durch die Vorspannung der Schraubenfeder 15 - in die Arretierstellung verschoben wird bis im Bereich der Keilfläche 13 und der Stützfläche 12 eine hinreichend große Klemmkraft erzeugt wird, so dass die Bewegung des Keilschiebers 14 endet. Die Kontaktflächen 8 und 10 an der gegenüber liegenden Seite des Einsteckabschnitts 6 bewirken in diesem Moment bereits eine formschlüssige Verriegelung der Kugelstange 3 in dem Aufnahmeelement 2.

Sobald der Keilschieber 14 seine Arretierstellung erreicht hat, hat sich das Handrad 18 gleichfalls wieder in seine Ausgangsstellung zurückbewegt, so dass der Blockierstift in die korrespondierende Bohrung eintreten kann und das Handrad 18 sich durch die Feder 20 automatisch wieder in seine Ruheposition begibt, in der es selbst gegen Drehung blockiert ist und somit über die Ritzel-Zahnstangen-Paarung auch eine Blockierung des Keilschiebers 14 bewirkt, so dass die Formschlussverbindung im Bereich des Einsteckabschnitts 6 der Kugelstange 3 gegen unbeabsichtigtes Lösen gesichert ist.

Wie sich aus den Figuren 1 und 2 entnehmen lässt, besitzt der Keilschieber 14 eine weitere Bohrung 36, in der sich ein zylinderförmiges Druckelement 37 aus einem hochfesten Polymermaterial (z.B. POM) befindet. Das Druckelement 37 besitzt einen konvexen Kopf 38, der um ein geringes Maß über eine Mantelfläche 39 des Keilschiebers 14 vorsteht, so dass sich das Druckelement 37 mit dem Kopf 38 an einer Wandung 40 der Bohrung für den Keilschieber 14 abstützt, bis es bei hinreichender Druckkraft vollständig in der Bohrung 36 aufgenommen ist. Auf diese Weise wird verhindert, dass der Keilschieber 14 trotzt der Übertragung von Klemmkräften sich im Laufe der Zeit festsetzt und nur noch mit größerer Kraftanstrengung von der Arretierstellung in die Lösestellung zurückgezogen werden könnte.

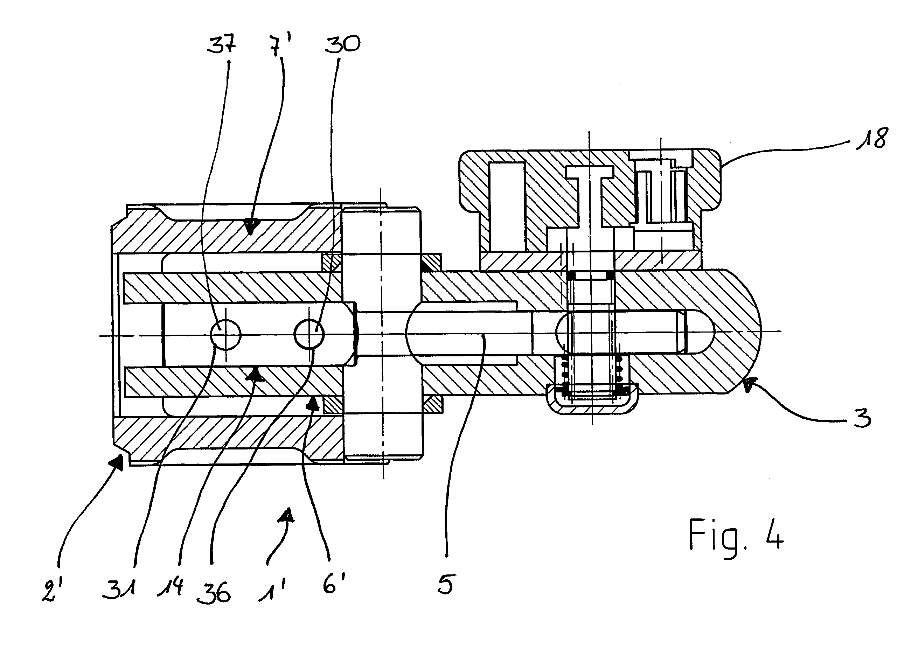

Der besondere erfindungsgemäße Vorteil des Keilschiebers 14 mit den beiden im Hinblick auf ihren Durchmesser 41 und ihre Tiefe 42 identischen Bohrungen 31 und 36 wird deutlich, wenn die in den Figuren 3 und 4 gezeigte zweite Variante einer Anhängekupplung 1' betrachtet wird. Bei der Anhängekupplung 1' handelt es sich um einen so genannten "horizontalen Typ", bei dem die Einführbewegung des Einsteckabschnitts in horizontale Richtung erfolgt. Typischerweise befindet sich dazu das Aufnahmeelement 2' hinter einer in einen Stoßfänger eingebrachten und beispielsweise mittels einer Klappe verschließbaren Öffnung.

Abgesehen von der um 90° gedrehten Einführbewegung des Einsteckabschnitts 6' ist der grundsätzliche Aufbau der beiden Anhängekupplungen 1, 1' im Wesentlichen identisch. Übereinstimmende Bauteile sind aus diesem Grunde mit denselben Bezugsziffern versehen, wobei in den Figuren 3 und 4 bei abweichend gestalteten Bauteilen mit Strichen versehene Bezugszeichen verwendet sind.

Im Fall der Anhängekupplung 1' gemäß den Figuren 3 und 4 ist die Anordnung der beiden Bauteile Rückhaltestift 30 und Druckelement 37 vertauscht. Bei Verwendung des identischen Keilschiebers 14 und auch des selben Rückhaltestifts 30 sowie des selben Druckelements 37 befindet sich das Druckelement 37 näher an der Stirnfläche 27 des Keilschiebers 14 als der Rückhaltestift 30. Der Rückhaltestift 30 ist deshalb in der weiter zurückgesetzten Stellung im Keilschieber 14 angeordnet, weil der Auslösestift 32' sich gleichfalls weiter zurückversetzt vom freien Ende des Einsteckabschnitts 6' befindet. Der Auslösewandabschnitt 34' befindet sich somit um denselben Betrag versetzt nunmehr näher am Öffnungsquerschnitt des Aufnahmeelements 2', als dies beim Aufnahmeelement 2 gemäß den Figuren 1 und 2 der Fall ist. Die Art und Weise der formschlüssigen Verriegelung des Einsteckabschnitts 6' in dem Aufnahmeelement 2' sowie der Zurückhaltung des Keilschiebers 14 in der Lösestellung einschließlich der Betätigung des Keilschiebers 14 mittels des Handrades 18 ist gegenüber dem Ausführungsbeispiel gemäß den Figuren 1 und 2 unverändert, so dass im Hinblick auf den Aufbau und die Funktionsweise dieser Bauteile auf den weiter oben stehenden zugehörigen Beschreibungstext verwiesen werden kann. Ein augenfälliger Unterschied zwischen den beiden Konstruktionsvarianten besteht schließlich noch darin, dass der Auslösestift 32' gemäß den Figuren 3 und 4 weiter entfernt von der Stirnfläche 27 des Keilschiebers 14 angeordnet ist als die Bohrungen 31 und 36, wohingegen sich der Auslösestift 32 im Falle der Figuren 1 und 2 in der Betriebsstellung der Kugelstange 3 zwischen den beiden Bohrungen 31 und 36 befindet.

### Bezugszeichenliste

- 1, 1': Anhängekupplung
- 2, 2': Aufnahmeelement
- 3, 3': Kugelstange
- 4: Kröpfung
- 5: Längsachse
- 6, 6': Einsteckabschnitt
- 7, 7': Aufnahmeabschnitt
- 8: Kontaktfläche
- 9: Hintergreifelement
- 10: Kontaktfläche
- 11: Rückhaltekörper
- 12: Stützfläche
- 13: Keilfläche
- 14: Keilschieber
- 15: Schraubenfeder
- 16: Stufe
- 17: Stufe
- 18: Handrad
- 19: Pfeil
- 20: Schraubenfeder
- 21: Tasche
- 22: Welle
- 23: Ritzel
- 24: Zahnstangenabschnitt
- 25: Pfeil
- 26: Pfeil
- 27: Stirnfläche
- 28: Schrägfläche
- 29: Pfeil
- 30: Rückhaltestift
- 31: Bohrung
- 32, 32': Auslösestift
- 33: Rückhaltebohrung
- 34, 34': Auslösewandabschnitt
- 35: Schraubenfeder
- 36: Bohrung
- 37: Druckelement
- 38: Kopf
- 39: Mantelfläche
- 40: Wandung
- 41: Durchmesser
- 42: Tiefe

## Patentansprüche

1. Kugelstange (3, 3') einer abnehmbaren Anhängekupplung (1, 1') mit einem fahrzeugfest anbringbaren Aufnahmeelement (2, 2'), mit dem in einer Betriebsstellung die Kugelstange (3, 3') Kräfte und Momente übertragend gekoppelt ist, wobei die Kugelstange (3, 3') an einem dem Aufnahmeelement (2, 2') abgewandten Ende mit einer Kupplungskugel zur Ankopplung eines Kupplungselements eines Anhängers versehen ist und an einem dem Aufnahmeelement (2, 2') zugewandten Ende einen Einsteckabschnitt (6, 6') aufweist, der in der Betriebsstellung in einen Aufnahmeabschnitt (7, 7') des Aufnahmeelements (2, 2') eingeführt und formschlüssig arretiert ist, und wobei Kugelstange (3, 3') mittels eines darin gelagerten Keilschiebers (14) arretiert ist, wobei der Keilschieber (14) in Richtung einer Längsachse (5) des Aufnahmeabschnitts (7, 7') von einer Arretierstellung in eine Lösestellung verschiebbar ist, in der der Formschluss aufgehoben ist, wobei der Keilschieber (14) senkrecht zu seiner Längsachse (5) mit einer ersten Bohrung (31) versehen ist, von der ein den Keilschieber (14) in der Lösestellung haltender Rückhaltestift (30) aufgenommen ist, und mit einer zweiten senkrecht zur Längsachse (5) des Keilschiebers (14) ausgerichteten Bohrung (36), in der ein über eine Mantelfläche (39) des Keilschiebers (14) vorstehendes Druckelement (37) aus einem ein Festsetzen des Keilschiebers (14) in dem Einsteckabschnitt (6, 6') des Keilschiebers (14) verhindernden Material angeordnet ist, **dadurch gekennzeichnet, dass** die Bohrungen (31, 36) denselben Durchmesser (41) und dieselbe Tiefe (42) besitzen, und dass der Rückhaltestift (30) von der zweiten Bohrung (36) und das Druckelement (37) von der ersten Bohrung (31) aufnehmbar ist.

2. Kugelstange nach Anspruch 1, **dadurch gekennzeichnet, dass** der Rückhaltestift (30) in eine Bohrung (31) eingesetzt ist und in einer Sperrstellung des Keilschiebers (14), beaufschlagt von einem Federelement, über eine Mantelfläche (39) des Keilschiebers (14) nach-außen vorsteht und in eine Bohrung (43) in dem Einsteckabschnitt (6, 6') der Kugelstange (3, 3') eingreift und in einer Freigabestellung des Keilschiebers (14) in das Innere des Keilschiebers (14) zurückgedrückt ist, wobei der Rückhaltestift (30) von einem in den Einsteckabschnitt (6, 6') des Keilschiebers (14) senkrecht zu dessen Längsachse verschiebbar gelagerten Auslösestift (32, 32') zurückdrückbar ist.

3. Kugelstange nach einem der Ansprüche 1 oder 2, **dadurch gekennzeichnet, dass** das Druckelement (37) näher an dem von dem Aufnahmeelement (2') in der Betriebsstellung aufgenommenen Ende der Kugelstange (3') angeordnet ist als der Rückhaltestift (30), wobei der Einsteckabschnitt (6') der Kugelstange (3') in der Betriebsstellung horizontal ausgerichtet ist.

4. Kugelstange nach Anspruch 3, **dadurch gekennzeichnet, dass** der Auslösestift (32') in der Betriebsstellung der Kugelstange (3') weiter entfernt von dem von dem Aufnahmeelement (6') in der Betriebsstellung aufgenommene Ende der Kugelstange (3') angeordnet ist als die beiden Bohrungen (31, 36).

5. Kugelstange nach einem der Ansprüche 1 bis 2, **dadurch gekennzeichnet, dass** der Rückhaltestift (30) näher an dem von dem Aufnahmeelement (2) in der Betriebsstellung aufgenommenen Ende der Kugelstange (3) angeordnet ist als das Druckelement (37), wobei der Einsteckabschnitt (6) der Kugelstange (3) in der Betriebsstellung vertikal ausgerichtet ist.

6. Kugelstange nach Anspruch 5, **dadurch gekennzeichnet, dass** der Auslösestift (32) in der Betriebsstellung der Kugelstange (3) zwischen den beiden Bohrungen (31, 36) angeordnet ist.

7. Anhängekupplung (1, 1') mit einer Kugelstange (3, 3') nach einem der Ansprüche 1 bis 6.

## Claims

1. A ball rod (3, 3') of a detachable tow coupling (1, 1') having a receiving element (2, 2') that can be attached fixed to the vehicle, with which in an operating position the ball rod (3, 3') is coupled in a forces and moment-transmitting manner, wherein the ball rod (3, 3') is provided at an end facing away from the receiving element (2, 2') with a coupling ball for coupling-up a coupling element of a trailer and at an end facing the receiving element (2, 2') comprises an insertion portion (6, 6'), which in the operating position is introduced into a receiving portion (7, 7') of the receiving element (2, 2') and is positively arrested and wherein the ball rod (3, 3') is locked by means of a wedge slide (14) mounted therein, wherein the wedge slide (14) is displaceable in the direction of a longitudinal axis (5) of the receiving portion (7, 7') from an arresting position into a releasing position, in which the positive connection is cancelled, wherein the wedge slide (14) is provided with a first bore (31) perpendicularly to its longitudinal axis (5), by which a retaining pin (30) holding the wedge slide (14) in the released position is received and having a second bore (36) that is perpendicularly orientated to the longitudinal axis (5) of the wedge slide (14), in which a pressure element (37) protruding over a lateral surface (39) of the wedge slide (14) of a material preventing a seizing of the wedge slide (14) in the insertion portion (6, 6') of the wedge slide (14) is arranged, **characterized in that** the bores (31, 36) have the same diameter (41) and the depth (42), and **in that** the retaining pin (30) can be received by the second bore (36) and the pressure element (37) by the first bore (31).

2. The ball rod according to Claim 1, **characterized in that** the retaining pin (30) is inserted into a bore (31) and in a locking position of the wedge slide (14) loaded by a spring element protrudes over a lateral surface (39) of the wedge slide (14) to the outside and engages in a bore (43) in the insertion portion (6, 6') of the ball rod (3, 3') and in a release position of the wedge slide (14) is pushed back into the interior of the wedge slide (14), wherein the retaining pin (30) can be pushed back a triggering pin (32, 32') that is displaceably mounted in the insertion portion (6, 6') of the wedge slide (14) perpendicularly to its longitudinal axis.

3. The ball rod according to any one of the Claims 1 or 2, **characterized in that** the pressure element (37) is arranged nearer to the end of the ball rod (3') received by the receiving element (2') in the operating position than the retaining pin (30), wherein the insertion portion (6') of the ball rod (3') is horizontally orientated in the operating position.

4. The ball rod according to Claim 3, **characterized in that** the triggering pin (32') in the operating position of the ball rod (3') is arranged further distant from the end of the ball rod (3') received by the receiving element (6') in the operating position than the two bores (31, 36).

5. The ball rod according to any one of the Claims 1 to 2, **characterized in that** the retaining pin (30) is arranged nearer the end of the ball rod (3) received by the receiving element (2) in the operating position than the pressure element (37), wherein the insertion portion (6) of the ball rod (3) is orientated vertically in the operating position.

6. The ball rod according to Claim 5, **characterized in that** the triggering pin (32) in the operating position of the ball rod (3) is arranged between the two bores (31, 36).

7. A tow coupling (1, 1') having a ball rod (3, 3') according to any one of the Claims 1 to 6.

## Revendications

1. Crochet à sphère (3,3') d'un attelage de remorque amovible (1,1') comportant un élément de réceptacle (2,2') pouvant être monté fixement sur le véhicule, avec lequel dans une position de fonctionnement le crochet à sphère 3,3') est couplé de manière à transmettre des forces et des couples, dans lequel le crochet à sphère (3,3') est pourvu sur une extrémité qui se détourne de l'élément de réceptacle (2,2') d'une sphère d'attelage pour accoupler un élément d'accouplement d'une remorque et présente sur une extrémité tournée vers l'élément de réceptacle (2,2') une portion d'enfichage (6,6'), qui dans la position de fonctionnement est insérée dans une portion de réception (7,7') de l'élément de réceptacle (2,2') et est arrêtée par conjonction de forme, et dans lequel le crochet à sphère (3,3') est arrêté au moyen d'une valve à tiroir conique (14) positionnée dans ce dernier, dans lequel la valve à tiroir conique (14) est déplaçable dans la direction d'un axe longitudinal (5) de la portion de réceptacle (7,7') d'une position d'arrêt en une position de desserrage, dans laquelle la conjonction de forme est annulée, dans lequel la valve à tiroir conique (14) est pourvue perpendiculairement à son axe longitudinal (5) d'un premier alésage (31), par lequel la goupille de retenue (30) maintenant la valve à tiroir conique (14) dans la position de desserrage est renfermée, et d'un deuxième alésage (36) aligné perpendiculairement à l'axe longitudinal (5) de la valve à tiroir conique (14), dans lequel un élément de pression (37) dépassant au-dessus d'une surface de gaine (39) de la valve à tiroir conique (14), constitué d'un matériau empêchant une immobilisation de la valve à tiroir conique (14) dans la portion d'enfichage (6,6') de la valve à tiroir conique (14) est disposé, **caractérisé en ce que** les alésages (31,36) possèdent le même diamètre (41) et la même profondeur (42), et **en ce que** la goupille de retenue (30) peut être retirée du deuxième alésage (36) et l'élément de pression (37) peut être retiré du premier alésage (31).

2. Crochet à sphère selon la revendication 1, **caractérisé en ce que** la goupille de retenue (30) est insérée dans un alésage (31) et dans une position de blocage de la valve à tiroir conique (14), sollicitée par un élément de ressort, dépasse vers l'extérieur au-dessus d'une surface de gaine (39) de la valve à tiroir conique (14) et s'engage dans un alésage (43) dans la position d'enfichage (6,6') et est repoussée fans une position de déblocage de la valve à tiroir conique (14) à l'intérieur de la valve à tiroir conique (14), dans lequel la goupille de retenue (30) peut être repoussée par une goupille de déverrouillage (32,32') positionnée de manière déplaçable dans la portion d'enfichage (6,6') de la valve à tiroir conique (14) perpendiculairement à l'axe longitudinale de celui-ci.

3. Crochet à sphère selon une des revendications 1 ou 2, **caractérisé en ce que** l'élément de pression (37) est disposé plus près sur l'extrémité du crochet à sphère (3') renfermée par l'élément de réceptacle (2') dans la position de fonctionnement que la goupille de retenue (30), dans lequel la portion d'enfichage (6') du crochet à sphère (3') est alignée horizontalement dans la position de fonctionnement.

4. Crochet à sphère selon la revendication 3, **caractérisé en ce que** la goupille de déverrouillage (32) est davantage éloignée dans la position de fonctionnement du crochet à sphère (3') de l'extrémité du crochet à sphère renfermée par l'élément de réceptacle (6') dans la position de fonctionnement que les deux alésages (31,36).

5. Crochet à sphère selon une des revendications 1 à 2, **caractérisé en ce que** la goupille de retenue (30) est disposée plus près sur l'extrémité du crochet à sphère (3) renfermée par l'élément de réceptacle (2) dans la position de fonctionnement que l'élément de pression (37), dans lequel la portion d'enfichage (6) du crochet à sphère (3) est alignée verticalement dans la position de fonctionnement.

6. Crochet à sphère selon la revendication 5, **caractérisé en ce que** la goupille de déverrouillage (32) est disposée dans la position de fonctionnement du crochet à sphère (3) entre les deux alésages (31,36).

7. Attelage de remorque (1,1') comportant un crochet à sphère (3,3') selon une des revendications 1 à 6.
